# EUROPÄISCHE PATENTSCHRIFT

(11) **EP 0 780 540 B1**
(45) Veröffentlichungstag und Bekanntmachung des Hinweises auf die Patenterteilung: **02.07.2003**
(21) Anmeldenummer: 96120340.3
(22) Anmeldetag: 18.12.1996
(51) Int. Cl.: E06B 9/52, B60P 3/32, B60P 3/36

(54) **Tür mit einer Eingangstür und einer Insektenschutztür**
Door with entry door and fly screen door
Porte avec porte d'entrée et porte moustiquaire

(30) Priorität: 18.12.1995 DE 29519956 U
(43) Veröffentlichungstag der Anmeldung: 25.06.1997
(73) Patentinhaber: Flohs, Hans, 09661 Hainichen (DE)
(72) Erfinder: Flohs, Hans, 09661 Hainichen (DE)
(74) Vertreter: Neumann, Steffen

(56) Entgegenhaltungen:
- DE-U- 29 611 079
- US-A- 4 094 099
- US-A- 4 389 817
- US-A- 5 406 687

## Beschreibung

Die Erfindung betrifft eine Tür mit einer Eingangstür und einer Insektenschutztür zum Verschließen einer Eingangstüröffnung, wobei die Tür die Merkmale des Oberbegriffs des Anspruchs 1 aufweist.

Eine derartige Insektenschutztür ist aus der US-A-4 094 099 bekannt. Bei dieser Lösung ist die Insektenschutztür an den Scharnieren der Eingangstür mittels der Scharnierblätter über die Schamierbolzen so integriert, dass die Insektenschutztür unabnehmbar gehalten ist.

Dies ist mit erheblichen Nachteilen verbunden. So muss die Insektenschutztür auch dann zwangsweise mitgeführt werden, wenn die Notwendigkeit für deren Einsatz, aufgrund der natürlichen Gegebenheiten in Zeiten eines geringen Insektenaufkommens (z.B. beim Camping im Winter oder zeitigen Frühjahr) oder wenn der Nutzer des Wohnwagen aus sonstigen Gründen auf den Einsatz der Insektenschutztür verzichten will, nicht gegeben ist. Mit gewissem handwerklichen Geschick, Fachkenntnis und unter Verwendung entsprechender Werkzeuge ließe sich durch eine Demontage der der Insektenschutztür zugeordneten Scharnierbauteile die Insektenschutztür von den Scharnieren der Eingangstür zwar grundsätzlich entfernen, wobei jedoch die Funktionsfähigkeit der Eingangstür zumindest schwerwiegend beeinträchtigt würde, weil die verbleibenden Scharnierbauteile ihre korrekte Führungsarbeit nicht mehr zu leisten in der Lage sind.

Gegenstand der Erfindung ist es, eine Lösung vorzuschlagen, die sowohl eine einfache Demontage der Insektenschutztür von den Scharnieren der Eingangstür ermöglicht als auch einen unkomplizierten nachträglichen Einbau (Montage) einer Insektenschutztür bei Eingangstüren gewährleistet, die bisher noch nicht mit einer derartigen Schutztür ausgerüstet waren.

Erfindungsgemäß wird dies bei einer Tür der obigen Gattung dadurch erreicht, dass der Schamierarm der Insektenschutztür einen Bolzen trägt, der in eine in einer Scharnierhülse eines Scharnieroberteils des Scharniers der Eingangstür befindliche Bohrung eingreift, so dass die Insektenschutztür für einen nachträglichen Einbau geeignet ist.

Die Vorteile der Erfindung bestehen darin, dass die Insektenschutztür lösbar an den Schar nieren der Eingangstür gelagert ist und damit bei fehlender Notwendigkeit ihres Einsatzes ohne fachliche Kenntnisse und besonderes handwerkliches Geschick sowie ohne die Verwendung von Werkzeugen abgenommen werden kann. Dabei wird weiterhin die Funktionfähigkeit der Eingangstür uneingeschränkt aufrechterhalten. Außerdem ist die Insektenschutztür bei erneut angestrebter Nutzung von jedermann wieder befestigbar. Letztlich wird eine nachträgliche Einbaumöglichkeit (Montage) für eine Insektenschutztür bei Eingangstüren eröffnet, die bisher noch nicht mit einer derartigen Schutztür ausgerüstet waren.

Vorteilhafte Weiterbildungen der Erfindung sind in den Unteransprüchen 2 bis 8 dargelegt.

Während die Fortbildung nach Anspruch 2 absichert, dass bei geschlossener Eingangstür, die Insektenschutztür in einem der jeweiligen Innenkontur der Eingangstür angepaßten geringen Abstand angeordnet werden kann und dadurch die Insektenschutztür nur einen unbeachtlichen Platzbedarf im Innenraum beansprucht, bezweckt die Ausgestaltung gemäß dem Anspruch 3 eine Abdichtung der Eingangstüröffnung trotz der zwischen Türrahmen und Eingangstür befindlichen Insektenschutztür.

Durch die Ausführung der Erfindung nach Anspruch 4 wird gewährleistet, dass die Insektenschutztür sowohl gemeinsam mit der Eingangstür an der Schließfalle des Türrahmens als auch nur an der geöffneten Eingangstür festgelegt werden kann.

Die Fortbildung nach Anspruch 5 gewährleistet, dass für eine von innen zu erfolgende Öffnung der Eingangstür, der durch die Insektenschutztür erforderliche Zugriff auf das Schloss der Eingangstür erfolgen kann.

Ein insektendichter Verschluss der Schutztür wird trotz der für den Zugriff auf das Schloss der Eingangstür erforderlichen Öffnung durch die Weiterbildung der Erfindung nach Anspruch 6 abgesichert.

Die Ausgestaltung der Erfindung gemäß Anspruch 7 sichert, dass die Insektenschutztür auch unabhängig von der Eingangstür durch Verriegelung an der Schließfalle geschlossen gehalten werden kann.

Letztlich realisiert die Fortbildung der Erfindung nach Anspruch 8, dass die Betätigung des Schiebers aus dem Innenraum des Wohnwagens und auch von außerhalb erfolgen kann.

Die Erfindung soll nachfolgend an einem Ausführungsbeispiel und zugehörigen Zeichnungen näher erläutert werden, wobei die
- Fig. 1: eine perspektivische Ansicht eines Wohnwagens mit erfindungsgemäßer Insektenschutztür, wobei sich die Insektenschutztür und die Eingangstür in unterschiedlicher Stellung innerhalb ihres Schwenkbereiches befinden
- Fig. 2: eine Darstellung des Scharniers der Eingangs- und der Insektenschutztür als Einzelheit "X" gemäß Fig. 1 (teilweise in Exploslvdarstellung)
- Fig. 3: eine durch den Schieber der Insektenschutztür und das Schloss der Eingangstür geführte Schnittdarstellung, wobei die beiden Türen in geschlossenem Zustand dargestellt sind
zeigt.

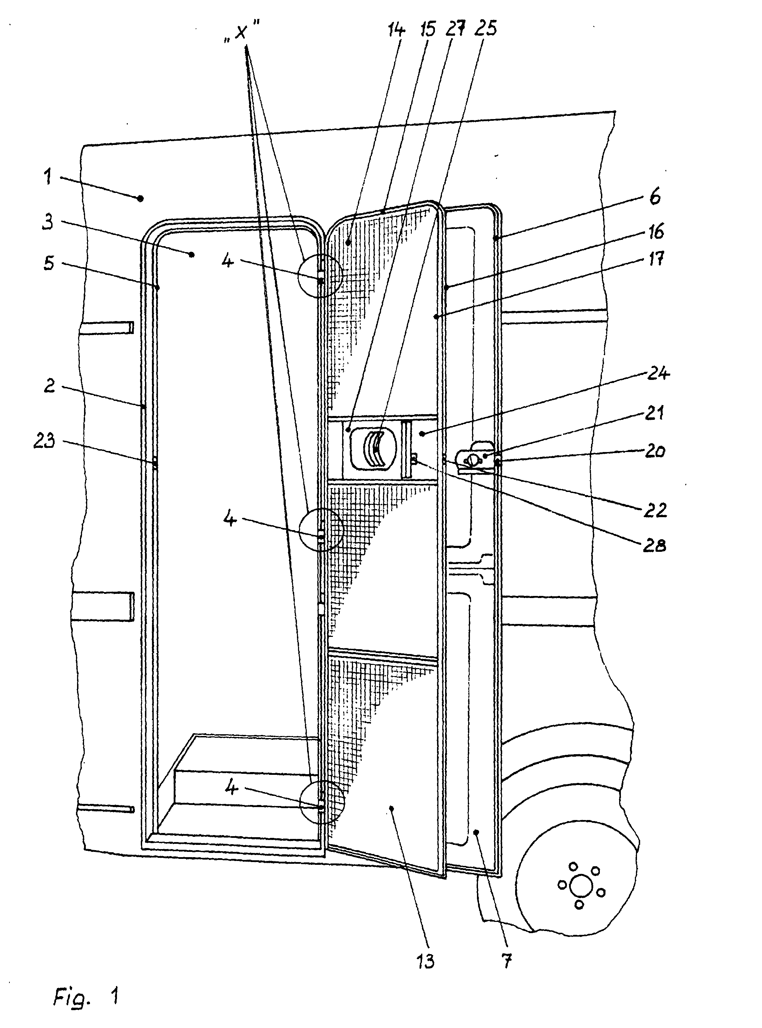

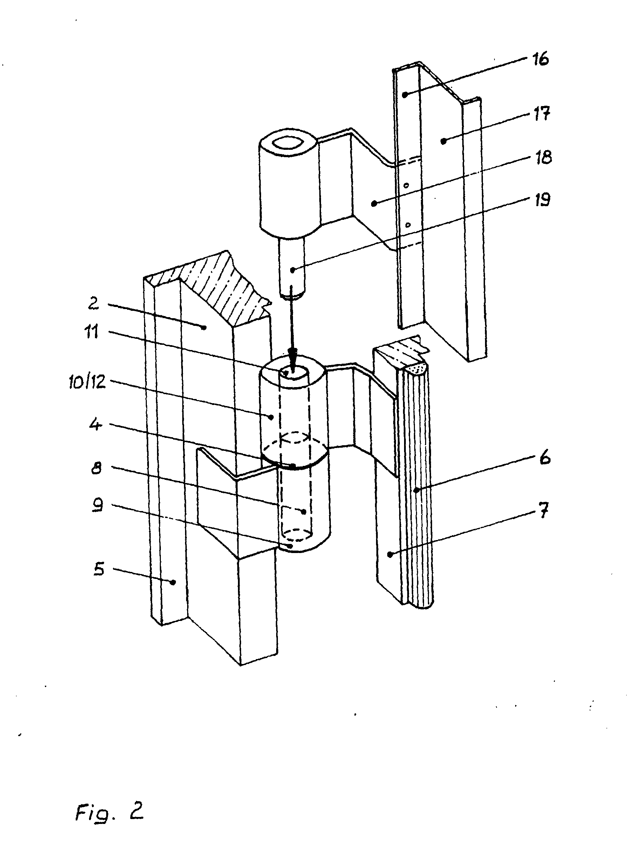

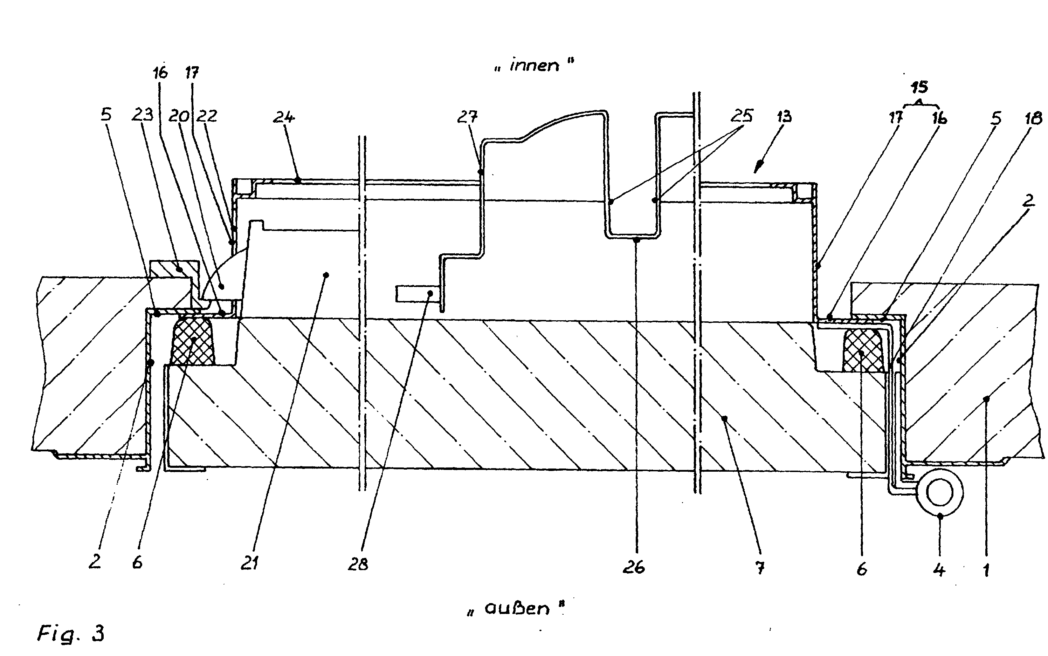

In Fig. 1 ist ein Wohnwagen 1 dargestellt, dessen von einem Türrahmen 2 umgrenzte Eingangstüröffnung 3, eine auf außenliegenden Scharnieren 4 schwenkbar gelagerte und im Bereich der Außenseite 5 des Türrahmens 2 mittels eines Dichtelements 6 versehene, nach außen öffnende Eingangstür 7 angeordnet ist. Die Eingangstür 7 wird dabei von Scharnieren 4 gehalten, die aus einem am Türrahmen 2 befestigten und einen Scharnierbolzen 8 tragenden Scharnierunterteil 9 und einem als Scharnierhülse 10 ausgebildeten sowie eine durchgehende Bohrung 11 zur Aufnahme des Scharnierbolzens 8 aufweisenden Scharnieroberteil 12 bestehen - Fig. 2 -. Im Schwenkbereich zwischen dem Türrahmen 2 und der Eingangstür 7 ist eine Insektenschutztür 13 vorgesehen, die aus einem mit Gaze 14 bespannten Rahmen 15 besteht. Der Rahmen 15 wird dabei durch ein Profil gebildet, welches aus einem Anschlagschenkel 16 und einem rechtwinklig dazu angeordneten Halteschenkel 17 besteht, wobei der Hafteschenkel 17 die Gaze 14 trägt - Fig. 1/3 -. Am Anschlagschenkel 16 des Rahmens 15 sind Scharnierarme 18 vorgesehen - Fig. 2 -, denen wiederum ein in die Bohrung 11 der Schamierhülse 10 der Eingangstür 7 einführbarer Bolzen 19 zugeordnet ist, so dass auch die Insektenschutztür 13 auf den Scharnieren 4 der Eingangstür 7 schwenkbar gehalten wird. Im Bereich des Schließkeiles 20 des Schlosses 21 der Eingangstür 7 weist der Halteschenkel 17 des Rahmens 15 der Insektenschutztür 13 eine Aussparung 22 auf - Fig. 1/3 -, die vom Schließkeil 20 sowohl beim Nichtgebrauch der Insektenschutztür 13 als auch bei geschlossener Eingangstür 7 durchgriffen wird, so dass die Insektenschutztür 13 mit an der geöffneten Eingangstür 7 festgelegt bzw. gemeinsam mit der Eingangstür 7 durch Arretierung des Schließkeiles 20 an der Schließfalle 23 des Türrahmens 2 unter Verschluss gehalten werden kann. Die Insektenschutztür 13 ist außerdem zu den für die Innenbetätigung/-öffnung (aus dem Innenraum des Wohnwagens 1 heraus) erforderlichen ungehinderten Zugriff auf das Schloss 21 der Eingangstür 7 mit einer Öffnung 24 ausgestattet, die durch einen geführten und beiderseitig mit Griffelementen 25, 26 versehenen Schieber 27 verschlossen werden kann. Am Schieber 27 ist weiterhin eine die Aussparung 22 im Halteschenkel 17 des Rahmens 15 durchgreifbare und an der Schließfalle 23 des Türrahmens 2 verriegelbare Schließzunge 28 angeordnet.

Der alleinige Verschluss der Eingangstüröffnung 3 durch die Insektenschutztür 13 wird erreicht, indem ausgehend von der geöffneten Eingangstür 7 nochmals deren Schloss 21 betätigt wird, wodurch der Schließkeil 20 außer Eingriff mit der Aussparung 22 im Halteschenkel 17 des Rahmens 15 gelangt und damit die Insektenschutztür 13 freigegeben und in Richtung der Eingangstüröffnung 3 geschwenkt werden kann. Nachfolgend schlägt der Anschlagschenkel 16 des Rahmens 15 an die Außenseite 5 des Türrahmens 2 an. Dadurch, dass die Insektenschutztür 13 im Bereich des Schlosses 21 der Eingangstür 7 mit der Öffnung (Durchgriff) 24 versehen ist, kann der Schieber 27 wahlweise mittels des inneren Griffelements 25 oder des äußeren Griffelements 26 betätigt werden, wobei die am Schieber 27 angeordnete Schließzunge 28 sich durch die Aussparung 22 im Halteschenkel 17 des Rahmens 15 erstreckt und in die Schließfalle 23 des Türrahmens 2 eingreift und damit letztlich die Insektenschutztür 13, abgedichtet gegen das Eindringen von Insekten in den Innenraum des Wohnwagens 1, verriegelt wird. Bei geschlossener Eingangstür 7 wird der sich dann parallel zur Außenseite 5 des Türrahmen 2 anlegende Anschlagschenkel 16 des Rahmens 15 der Insektenschutztür 13 einerseits gegen die Dichtfläche an der Außenseite 5 des Türrahmens 2 für die Eingangstür 7 gedrückt und andererseits von dem Dichtelement 6 der Eingangstür 7 kontaktiert, so dass beide Türen (Insektenschutztür und Eingangstür) 13, 7 die Eingangstüröffnung 3 abdichtend verschließen - Fig. 3 -. Bei geschlossener Eingangstür 7 dient der auch innenseitig mit einem Griffelement 25 versehene Schieber 27 der Insektenschutztür 13 dazu, dass aus dem Innenraum des Wohnwagen 1 ein Zugriff auf das Schloss 21 der Eingangstür 7 ermöglichst wird und diese insbesondere gemeinsam mit der Insektenschutztür 13 geöffnet werden kann.

### Bezugszeichenliste

- 1: Wohnwagen
- 2: Türrahmen
- 3: Eingangstüröffnung
- 4: Scharnier
- 5: Außenseite (von 2)
- 6: Dichtelement (von 7)
- 7: Eingangstür
- 8: Scharnierbolzen (von 9)
- 9: Schamierunterteil
- 10: Scharnierhülse (von 12)
- 11: Bohrung (von 12)
- 12: Scharnieroberteil
- 13: Insektenschutztür
- 14: Gaze
- 15: Rahmen
- 16: Anschlagschenkel (an 15)
- 17: Halteschenkel (an 15)
- 18: Scharnierarm (von 13/an 16)
- 19: Bolzen
- 20: Schließkeil
- 21: Schloss (an 7)
- 22: Aussparung (an 17)
- 23: Schließfalle
- 24: Öffnung (in 13)
- 25: Griffelement (an 27 - innen)
- 26: Griffelement (an 27 - außen)
- 27: Schieber
- 28: Schließzunge

## Patentansprüche

1. Tür mit einer Eingangstür (7) und einer Insektenschutztür (13) zum Verschließen einer Eingangstüröffnung, insbesondere eines Wohnwagens, Wohnmobils o.ä., wobei die nach außen öffnende Eingangstür (7) auf außenliegenden Scharnieren schwenkbar gelagert werden kann und an der Außenseite eines Türrahmens und/oder der Eingangstür ein Dichtelement (6) vorgesehen ist, wobei die Insektenschutztür (13) aus einem Rahmen (15) mit Gaze (14) besteht und Scharnierarme aufweist, so daß sie schwenkbar auf Scharnieren fixiert wird, und die Eingangstür Scharniere aufweist, so dass die Insektenschutztür (13) im Bereich zwischen dem Türrahmen (2) und der Eingangstür (7) angeordnet werden kann und an den Scharnieren (4) der Eingangstür (7) mittels den Scharnierarmen (18) gelagert ist, wobei diese Scharnierarme (18) an einem aus einem Anschlagschenkel (16) und dazu winklig angeordneten Halteschenkel (17) gebildeten Rahmen (15) angeordnet sind und bei geschlossener Insektenschutztür (13) der Anschlagschenkel (16) an der Außenseite (5) des Türrahmens (2) abdichtend anlegbar sowie die Insektenschutztür (13) nach außen öffnend ausgebildet ist,
**gekennzeichnet dadurch,**
**dass** der Schamierarm (18) der Insektenschutztür (7) einen Bolzen (19) trägt, der in eine in einer Schamierhülse (10) eines Scharnieroberteils (12) des Schamiers (4) der Eingangstür (7) befindliche Bohrung (11) eingreift, so dass die Insektenschutztür für einen nachträglichen Einbau geeignet ist.

2. Tür nach Anspruch 1,
**gekennzeichnet dadurch,**
**dass** der Halteschenkel (17) rechtwinklig zum Anschlagschenkel (16) angeordnet ist.

3. Tür nach Anspruch 1,
**gekennzeichnet dadurch,**
**dass** bei geschlossener Eingangstür (7) am Anschlagschenkel (16) das Dichtelement (6) der Eingangstür (7) abdichtend anliegt.

4. Tür nach Anspruch 1,
**gekennzeichnet dadurch,**
**dass** der Halteschenkel (17) des Rahmens (15) im Bereich eines Schließkeiles (20) eines Schlosses (21) der Eingangstür (7) eine Aussparung (22) aufweist.

5. Tür nach Anspruch 1,
**gekennzeichnet dadurch,**
**dass** die Insektenschutztür (13) im Bereich des Schlosses (21) der Eingangstür (7) eine verschließbare Öffnung (24) aufweist.

6. Tür nach Anspruch 5
**gekennzeichnet dadurch,**
**dass** die Öffnung (24) mittels eines geführten Schiebers (27) verschließbar ausgebildet ist.

7. Tür nach Anspruch 6,
**gekennzeichnet dadurch,**
**dass** am Schieber (27) eine die Aussparung (24) im Halteschenkel (17) durchgreifbare und an einer Schließfalle (23) des Türrahmens (2) verriegelbare Schließzunge (28) angeordnet ist.

8. Tür nach Anspruch 6,
**gekennzeichnet dadurch,**
**dass** der Schieber (27) beiderseitig mit einem Griffelement (25, 26) versehen ist.

## Claims

1. A door with an entry door (7) and an insert protection door (13) for closing off an entry door opening, in particular of a caravan, mobile home or similar, whereby the outwards opening entry door (7) can be swivel-mounted on external hinges and a sealing element (6) is provided on the outside of a door frame and/or the entry door, whereby the insert protection door comprises a frame (15) with gauze (14) and has hinge arms, so that it is pivotably fixed on hinges, and the entry door (7) has hinges, so the insert protection door (13) can be positioned in the region between the door frame (2) and the entry door (7) and is mounted on the hinges (4) of the entry door (7) by means of the hinge arms (18), whereby these hinge arms (18) are arranged on the frame (15) formed by a stop arm (16) and a holding arm (17) arranged at right angles thereto and when the insert protection door (13) is closed the stop arm (16) can be located in a sealed manner on the outside (5) of the door frame (2) and the insert protection door (13) is designed opening outwards,
**characterised in that**
the hinge arm (18) of the insert protection door (7) has a bolt (19), which engages in a bore (11) located in a hinge sleeve (10) of an upper hinge part (12) of the hinge (4), so that the insert protection door is suitable for refitting.

2. The door as claimed in Claim 1,
**characterised in that**
the holding arm (17) is arranged at right angles to the stop arm (16).

3. The door as claimed in Claim 1,
**characterised in that**
when the entry door (7) is closed the sealing element (6) of the entry door (7) lies sealed on the stop arm (16).

4. The door as claimed in Claim 1,
**characterised in that**
the holding arm (17) of the frame (15) has a recess (22) in the region of a key collar (20) of a lock (21) of the entry door (7).

5. The door as claimed in Claim 1,
**characterised in that**
the insert protection door (13) has a lockable opening (24) in the region of the lock (21) of the entry door (7).

6. The door as claimed in Claim 5,
**characterised in that**
the opening (24) is designed to be locked by means of a guided slide (27).

7. The door as claimed in Claim 6,
**characterised in that**
a closing tongue (28) which can penetrate the recess (24) in the holding arm (17) and be locked on a latch (23) of the door frame (2) is arranged on the slide (27).

8. The door as claimed in Claim 6,
**characterised in that**
the slide (27) is provided on both sides with a grip element (25, 26).

## Revendications

1. Porte comportant une porte d'entrée (7) et une porte moustiquaire (13) pour la fermeture d'une ouverture de porte d'entrée, notamment d'une caravane, d'un mobilehome ou similaire, la porte d'entrée ouvrant vers l'extérieur (7) étant installée en pivotement sur des charnières placées à l'extérieur et un élément d'étanchéité (6) étant prévu sur le côté extérieur d'un cadre de porte et/ou de la porte d'entrée, la porte moustiquaire (13) consistant en un cadre (15) tendu de gaze (14) et présentant des bras à charnières, de sorte qu'elle est fixée en pivotement sur des charnières, et la porte d'entrée (7) présentant des charnières, de sorte que la porte moustiquaire (13) peut être disposée dans la zone entre le cadre de porte (2) et la porte d'entrée (7) et est installée sur les charnières (4) de la porte d'entrée (7) au moyen des bras à charnières (18), ces bras à charnières (18) étant disposés sur un cadre (15) composé d'une branche de butée (16) et d'une branche de retenue (17) disposée en angle par rapport à celle-ci et la branche de butée (16) pouvant, lorsque la porte moustiquaire (13) est fermée, être appliquée hermétiquement sur le côté extérieur (5) du cadre de porte (2), et la porte moustiquaire (13) étant conformée de manière à ouvrir vers l'extérieur,
**caractérisée en ce que**
le bras à charnières (18) de la porte moustiquaire (7) supporte une cheville (19) qui s'engrène dans un alésage (11) se trouvant dans un manchon de charnière (10) d'une partie supérieure de charnière (12) de la charnière (4) de la porte d'entrée (7), de sorte que la porte moustiquaire est adaptée à un montage après-coup.

2. Porte selon la revendication 1,
**caractérisée en ce que**
la branche de retenue (17) est disposée en angle droit par rapport à la branche de butée (16).

3. Porte selon la revendication 1,
**caractérisée en ce que**
lorsque la porte d'entrée (7) sur la branche de butée (16) est fermée, l'élément d'étanchéité (6) de la porte d'entrée (7) est hermétique.

4. Porte selon la revendication 1,
**caractérisée en ce que**
la branche de retenue (17) du cadre (15) présente, au niveau d'une cale de fermeture (20) d'une serrure (21) de la porte d'entrée (7), un évidement (22).

5. Porte selon la revendication 1,
**caractérisée en ce que**
la porte moustiquaire (13) présente dans la zone de la serrure (21) de la porte d'entrée (7), une ouverture pouvant être fermée (24).

6. Porte selon la revendication 5,
**caractérisée en ce que**
l'ouverture (24) est conçue de manière à pouvoir être fermée au moyen d'une tirette guidée (27).

7. Porte selon la revendication 6,
**caractérisée en ce que**
sur la tirette (27) est disposée une languette de fermeture (28) pouvant être passée dans l'évidement (24) de la branche de retenue (17) et pouvant être fermée sur une trappe de fermeture (23) du cadre de porte (2).

8. Porte selon la revendication 6,
**caractérisée en ce que**
la tirette (27) est munie des deux côtés d'un élément de poignée (25, 26).
